Europäisches Patentamt

European Patent Office

Office européen des brevets

(19)

(11) Publication number: **0 167 797**
**A2**

(12)

# EUROPEAN PATENT APPLICATION

(21) Application number: **85106790.0**

(22) Date of filing: **01.06.85**

(51) Int. Cl.⁴: **G 06 F 15/72**

---

(30) Priority: **07.07.84 JP 141190/84**

(43) Date of publication of application:
**15.01.86 Bulletin 86/3**

(84) Designated Contracting States:
**DE FR GB**

(71) Applicant: DAIKIN INDUSTRIES, LIMITED
Shinhankyu-Building, 12-39, I-chome Umeda
Kita-ku Osaka-shi Osaka(JP)

(72) Inventor: Urano, Yoshio
1-1 Nango 2-chome
Ootsu-shi Shiga-ken(JP)

(72) Inventor: Okawa, Makoto
1000-5 Azaootani Okamoto-cho
Kusatsu-shi Shiga-ken(JP)

(74) Representative: Betten, Jürgen, Dipl.-Ing. et al,
Patentanwälte Lieck & Betten Maximiliansplatz 10
D-8000 München 2(DE)

(54) Clip circuit for CRT display unit.

(57) An ALU (82) in a CRT display unit performs calculation based on line segment data provided from a line segment data providing circuit (20) and data representing a border line provided from an area data providing circuit (21) to obtain a ratio of a distance between the start point coordinates and the end point coordinates of the line segment to a distance between the start point coordinates or end point coordinates and a border line of a predetermined area. When it is determined that the calculated ratio is larger than a predetermined value, the ALU (82) sets new coordinates in the vicinity of a point of intersection between the line segment and the border line of the predetermined area instead of the start point coordinates or the end point coordinates of the line segment. Then, based on the newly set coordinates and the data representing the border line, the ALU (82) calculates by a middle point division method, a point of intersection between a line segment connecting the newly set coordinates and start point coordinates or end point coordinates and the border line. Thus, the time required for a middle point obtained by division to approach the border line can be shortened.

./...

Croydon Printing Company Ltd.

FIG.4

0167797

TITLE OF THE INVENTION

Clip Circuit for CRT Display Unit

BACKGROUND OF THE INVENTION

Field of the Invention

The present invention relates to a clip circuit for CRT display unit.  More particularly, the present invention relates to a clip circuit for CRT display unit, in which portions outside a predetermined area represented on the CRT screen are clipped from a line segment extending from the inside of the predetermined area to the outside of the area or from the outside of the area to the inside of the area.

Description of the Prior Art

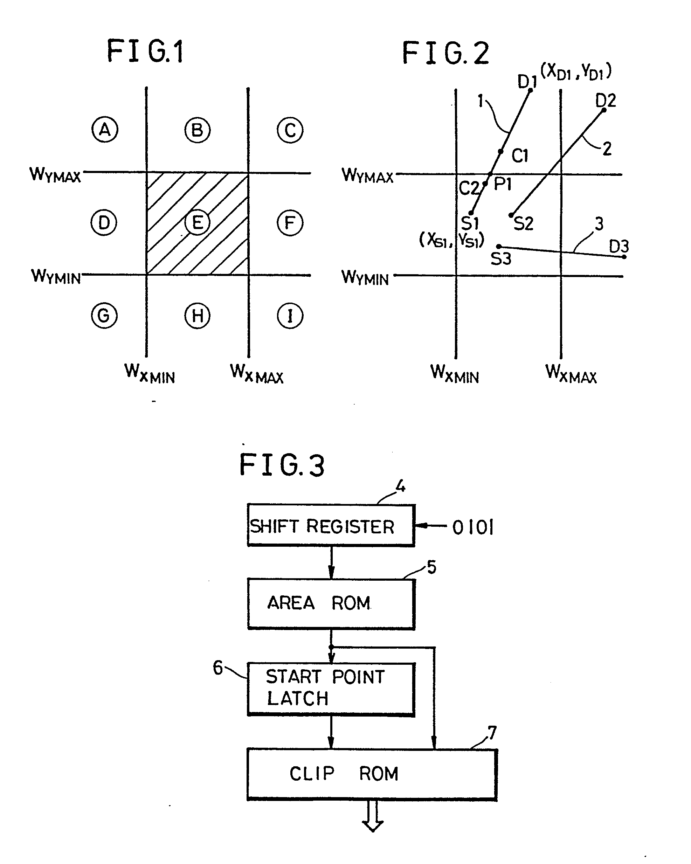

Figs. 1 and 2 are illustrations for explaining a conventional method for clipping a line segment in two-dimensional planes and Fig. 3 is a schematic block diagram in a conventional clip circuit.

First, referring to Figs. 1 to 3, a conventional clip circuit will be described.  In a CRT display unit, sometimes the CRT screen is divided into areas A to I as shown in Fig. 1 so that the portions existing outside a predetermined area E bounded by the border lines $W_{XMAX}$, $W_{XMIN}$, $W_{YMAX}$ and $W_{YMIN}$ are clipped from the line segments shown in Fig. 2 extending from the area E to other areas A to D and F to I or from these areas A to D and F to I into the area E.

For this purpose, the following calculations are performed with respect to the start point coordinates $(X_{S1}, Y_{S1})$ of the line segment 1 and the border lines $W_{XMAX}$, $W_{XMIN}$, $W_{YMAX}$, and $W_{YMIN}$ surrounding the area E.

$$X_{S1} - W_{XMIN} \cdots 0$$
$$X_{S1} - W_{XMAX} \cdots 1$$
$$Y_{S1} - W_{YMIN} \cdots 0$$
$$Y_{S1} - W_{YMAX} \cdots 1$$

In the above calculations, a sign flag signifying that 0 is non negative and 1 is negative is determined. The sign flag "0101" represents the area E. The above stated calculations are performed by an arithmetic logic unit (ALU) and the sign flag "0101" is supplied to a shift register 4 shown in Fig. 3. The shift register 4 supplies the sign flag "0101" to an area ROM 5. In this area ROM 5, data representing the areas A to I are stored beforehand and when the above stated sign flag "0101" is received, data representing the area E is provided from the area ROM 5.

If the sign flag is "1101", the area ROM 5 provides data representing the area D. Among the data provided from the area ROM 5, the start point coordinates $(X_{S1}, Y_{S1})$ of the line segment 1 are latched in a start point latch 6 and the start point coordinates $(X_{S1}, Y_{S1})$ are supplied to a clip ROM 7.

Data representing the area B where the coordinates $(X_{D1}, Y_{D1})$ of the end point D1 of the line segment 1 exist are supplied to the clip ROM 7. The clip ROM 7 provides a select signal indicating the state IN → OUT since the line segment 1 extends from the area E to the area B, based on the areas to which the start point $S_1$ and the end point $D_1$ belong respectively. More specifically, based on the area data provided from the area ROM 5 and the start point ratch 6, the clip ROM 7 provides a signal indicating that the line segment 1 extends from the area E to the area B. If the line segment extends from the area A to the area B, the clip ROM 7·provides a select signal indicating the state OUT → OUT. If the start point and the end point of the line segment both exist in the area E, the clip ROM 7 provides a select signal indicating the state IN → IN. The select signal is supplied to a program controller not shown.

The ALU 82 applies a middle point division method to the line segment 1 to calculate a point of intersection $P_1$ between the line segment 1 and a line segment $W_{YMAX}$ representing a border line of the area E. More specifically, using a middle point division method, an intermediate point C1 between the start point S1 and the

- 3 -

end point D1 is calculated and based on the above mentioned calculation formula, a sign flag is calculated and entered in the shift register 4. Then, calculation is performed to determine whether a line segment connecting the start point S1 and the intermediate point C1 crosses the line segment $W_{YMAX}$ or not. If it crosses the line segment $W_{YMAX}$, the intermediate point C1 is then made a new end point. By representing this operation, an intermediate point C2 between the start point S1 and the intermediate point C1 as the new end point is calculated and since the point C2 is in the IN state, this intermediate point C2 is made a new start point. Thus, each line segment is divided into two at a middle point and if such division is made successively by selecting a divided line segment crossing the border line $W_{YMAX}$ each time, a start point and an end point can be converged on the intersection point P1.

However, in order to obtain the intersection point P1 by the above described middle point division method, it is necessary to perform calculation to obtain a sign flag for each division at a middle point and it is necessary each time to supply the sign flag to the shift register 4 and determine an area based on the sign flag by the area ROM 5 so that it is determined each time by the clip ROM 7 whether a line segment is in the state IN → OUT, OUT → IN,

- 4 -

etc. In addition, the number of loops till the distance between a start point and an end point becomes lower than a predetermined value has to be increased and the processing time becomes unnecessarily long.

SUMMARY OF THE INVENTION

Therefore, a principal object of the present invention is to provide a clip circuit of a CRT display unit, in which the number of loops can be decreased and a point of intersection between a line segment and a border line of a predetermined area can be obtained in a short time using a middle point division method.

Briefly stated, in the present invention, a ratio of a distance between the start point coordinates and the end point coordinates of a line segment to a distance between the start point coordinates or end point coordinates and a border line of a predetermined area is calculated and it is determined whether the calculated ratio is larger than a predetermined value or not. If the calculated ratio is larger than the predetermined value, new start point coordinates or new end point coordinates are set in the vicinity of a point of intersection between the line segment and the border line of the predetermined area so that a point of intersection between a line segment connecting the new start point or new end point

- 5 -

coordinates and the border line of the predetermined area is obtained by a middle point division method.

Thus, according to the present invention, new start point coordinates or new end point coordinates are set in the vicinity of the point of intersection in case where a ratio of a distance between the start point coordinates and the end point coordinates to a distance between the start point coordinates or end point coordinates and the border line of the predetermined area is large and consequently, at the time of dividing at a middle point, each line segment represented by newly set start point coordinates or end point coordinates and the border line, the time required for a middle point obtained by the division to reach a referential value on a border line of a predetermined area can be shortened.

In a preferred embodiment of the present invention, a line segment connecting start point coordinates and end point coordinates is divided by a specified number according to the calculated ratio and by regarding the number obtained by the division as a unit, new start point coordinates or new end point coordinates are set.

Further, in a more preferred embodiment of the present invention, if the calculated ratio is smaller than a predetermined value, a point of intersection between a line segment connecting the start point coordinates and

- 6 -

the end point coordinates provided from line segment data providing means and a border line of a predetermined area is obtained by a middle point division method.

These objects and other objects, features, aspects and advantages of the present invention will become more apparent from the following detailed description of the present invention when taken in conjunction with the accompanying drawings.

BRIEF DESCRIPTION OF THE DRAWINGS

Figs. 1 and 2 are illustrations for explaining a conventional method for clipping a line segment in two-dimensional planes.

Fig. 3 is a schematic block diagram in a conventional clip circuit.

Fig. 4 is a schematic block diagram showing an electrical structure of an embodiment of the present invention.

Fig. 5 is a diagram showing a logic table stored in a priority encoder shown in Fig. 4.

Figs. 6 to 10 show an example of a line segment to be clipped for the purpose of explaining a specific operation of an embodiment of the present invention.

Figs. 11 and 12A to 12C are flow charts for explaining a specific operation of an embodiment of the present invention; particularly, Fig. 11 shows a main routine and Figs. 12A to 12C show a Pio routine.

DESCRIPTION OF THE PREFERRED EMBODIMENTS

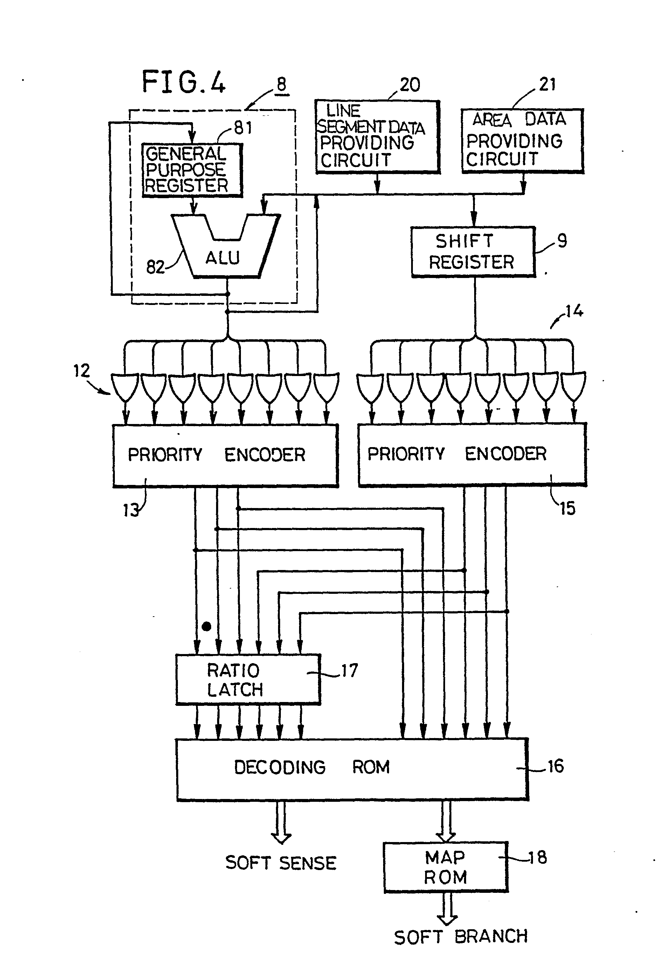

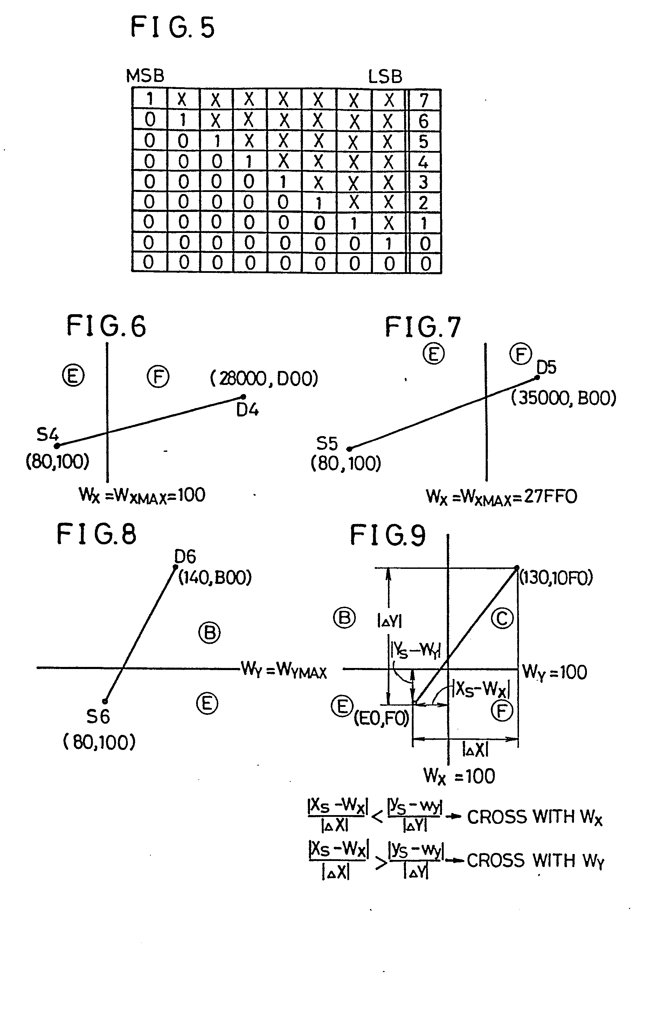

Fig. 4 is a schematic block diagram showing an electrical structure of an embodiment of the present invention and Fig. 5 is a diagram showing a logic table stored in a priority encoder shown in Fig. 4.

First, referring to Figs. 4 and 5, a structure of an embodiment of the present invention will be described. To a general purpose register 81 in a calculating portion 8, start point coordinates and end point coordinates of each line segment are supplied from a line segment data providing circuit 20 and data of the border lines $W_{XMAX}$, $W_{XMIN}$, $W_{YMAX}$ and $W_{YMIN}$ surrounding the area E are supplied from an area data providing circuit 21. An ALU 82 performs calculation using these data and proceeds data of 4 bits x 8 = 32 bits in all to a priority encoder 13 through an OR gate 12. Further, the ALU 82 calculates a change amount $\Delta X$ in the X coordinates and a change amount $\Delta Y$ in the Y coordinates for each line segment and provides these amounts as the data of 4 bits x 8 = 32 bits in all to a shift register 9 and further provides them to a priority encoder 15 through an OR gate 14. The shift register 9 makes division by bit shift of the change amounts $\Delta X$ and $\Delta Y$.

- 8 -

The priority encoders 13 and 15 determine what bit among the data provided from the OR gates 12 and 14 is the logic "1" by priority to upper figures, as shown in Fig. 5, so that the data provided from the ALU 82 are contracted. Then, the data provided from the priority encoders 13 and 15 are supplied to a decoding ROM 16 and are ratched in a ratio latch 17, which provides an output to the decoding ROM 16. Based on the outputs of the priority encoders 13 and 15 and the output of the ratio latch 17, the decoding ROM 16 provides a soft sense signal according to the ratio of a distance between the start point coordinates and the end point coordinates of the line segment to a distance between the start point coordinates and the border lines $W_{XMAX}$, $W_{XMIN}$, $W_{YMAX}$ and $W_{YMIN}$, and also provides a decode output to a map ROM 18. The map ROM 18 provides a soft branch signal based on the decode signal from the decoding ROM 16. This soft branch signal is supplied to the program controller.

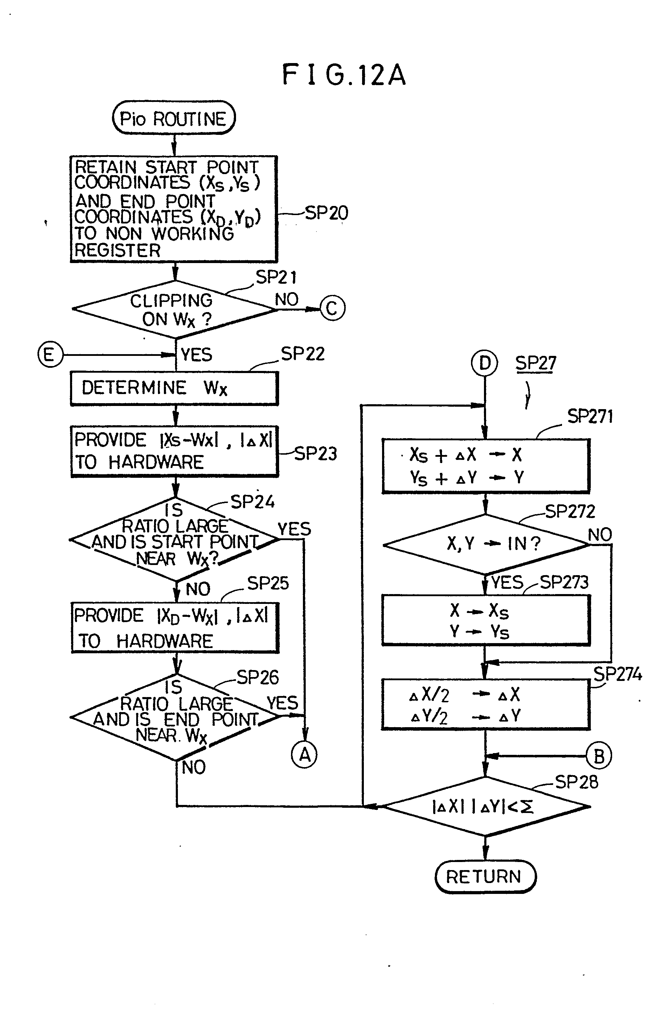

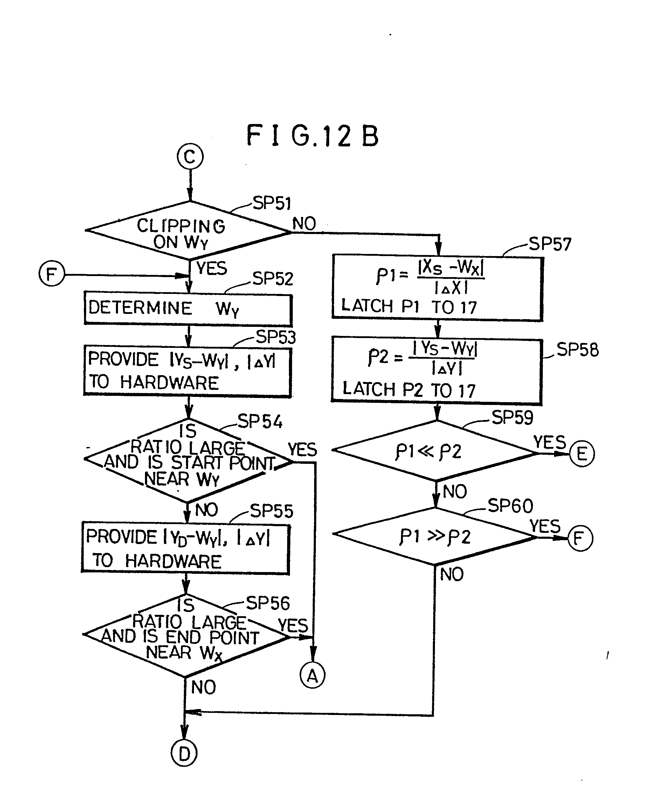

Figs. 6 to 10 are diagrams showing an example of a line segment to be clipped for the purpose of explaining a specific operation of the present invention. Figs. 11 and 12A to 12C are flow charts for explaining a specific operation of an embodiment of the present invention. Particularly, Fig. 11 shows a main routine and Figs. 12A to 12C show a Pio routine.

Referring now to Figs. 4 to 12C, a specific operation of an embodiment of the present invention will be described.

For the purpose of facilitating the understanding of the description, a line segment S4, D4 extending from the area E to the area F as shown in Fig. 6 is taken as an example in the following. It is assumed that the start point coordinates S4 (H # 80, H # 100) of this line segment S4, D4 exist in the area E, that the end point coordinates D4 (H # 28000, H # D00) thereof exist in the area F and that this line segment crosses the border line $W_{XMAX}$ = H # 100. As can be seen from Fig. 6, the start point coordinates S4 are near the border line $W_{XMAX}$ and the end point coordinates D4 are distant from the border line $W_{XMAX}$. The portion from a point of intersection between this line segment S4, D4 and the border line $W_{XMAX}$ to the end point coordinates D4 is to be clipped.

First, in step (shown simply as SP in the figures) SP1 shown in Fig. 11, the ALU 82 reads the start point coordinates S4 and the end point coordinates D4 and calculates sign flags of the start point coordinates S4 and the end point coordinates D4 in the step SP2 and step SP3. Since the start point coordinates S4 exist in the area E, the sign flag thereof is "0101" and since the end point coordinates D4 exist in the area F, the sign flag

- 10 -

thereof is "0001". These sign flags are entered in the shift register 4 shown in Fig. 3 and the sift register 4 provides an address signal to the area ROM 5. The area ROM 5 provides area data representing the area E as the area of the start point coordinates S4 and provides area data F as the area of the end point coordinates D4. The clip ROM 7 provides a select code signal specifying the area E and the area F. Since the line segment extending from the area E to the area F is in the state IN → OUT, the program proceeds to steps SP4 and SP5 as shown in Fig. 11 and it is determined in step SP6 that the line segment is in the state IN → OUT. Then, the program proceeds to the Pio routine in step SP7.

In the Pio routine, since the start point coordinates and the end point coordinates are changing for convergence to obtain an intersection point, the initial start point and end point coordinates are retained in a non working general purpose register 81 of the calculating portion 8 in step SP20. Then, as shown in Fig. 12A, it is determined in step SP21 whether the line segment is to be clipped on the border line $W_X$. The border line $W_X$ is determined in step SP22 based on the select signal from the clip ROM 7 shown in Fig. 3 as described above. In the example shown in Fig. 6, $W_{XMAX}$ = H # 100 is determined as the border line $W_X$. Subsequently, processing in the X direction is first performed.  More specifically, in step SP23, data $\left| X_S - W_X \right| = \left| H \# 100 - H \# 801 \right| = H \# 80$ and $\left| \Delta X \right| = \left| H \# 28000 - H \# 100 \right| = H \# 27F00$ are provided to the OR gates 12 and 14 shown in Fig. 4.

The OR gate 12 provides H # 00000080 as B # 00000010 to the priority encoder 13.  The OR gate 14 provides H # 00027F00 as B # 00011100 in the contracted form to the priority encoder 15.  The priority encoders 13 and 15 further contract the received data.  More specifically, as shown in the logic table in Fig. 5, the data B # 00000010 corresponds to "1" and the data B # 00011100 corresponds to "4".  The contracted data "1" and "4" are supplied to the decoding ROM 16 and the ratio latch 17.

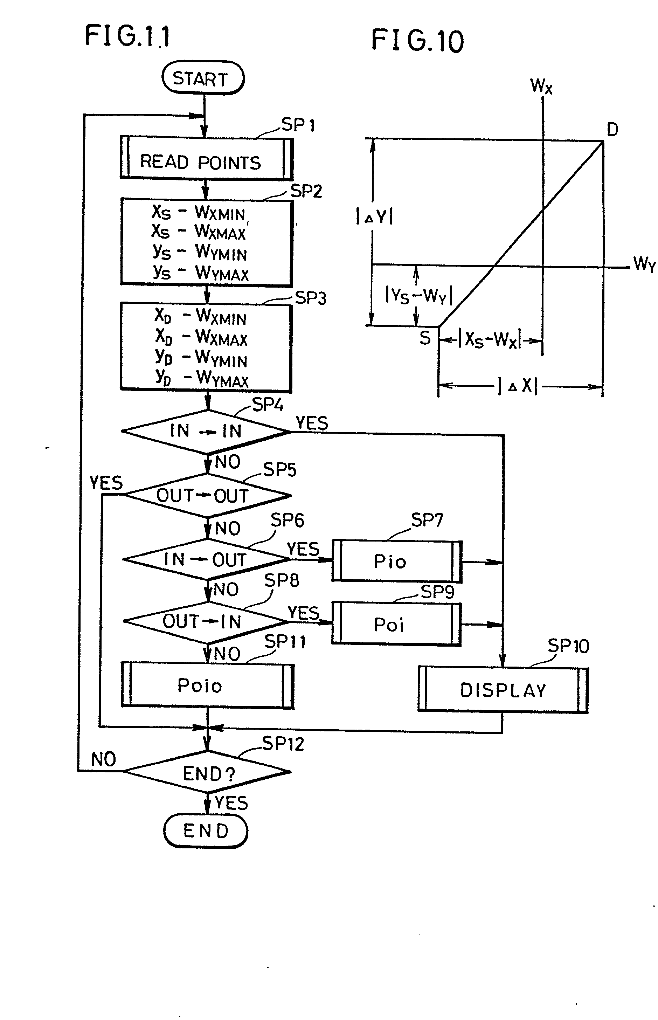

In this case, as shown in Fig. 10, $\left| X_S - W_X \right|$ represents the distance between the start point S4 and the border line $W_X$ in the X direction and $\left| \Delta X \right|$ represent the distance between the start point S4 and the end point D4 in the X direction.  Accordingly, it can be understood that since the upper figure "1" in the outputs "1" and "4" from the priority encoders 13 and 15 is small and the lower figure "4" is larger, the magnitudes if $\left| X_S - W_X \right|$ and $\left| \Delta X \right|$ are greatly different and the number of steps for obtaining the point of intersection between the line segment S4, D4

- 12 -

and the border line $W_X$ by a middle point division method is increased, which makes the processing time long.

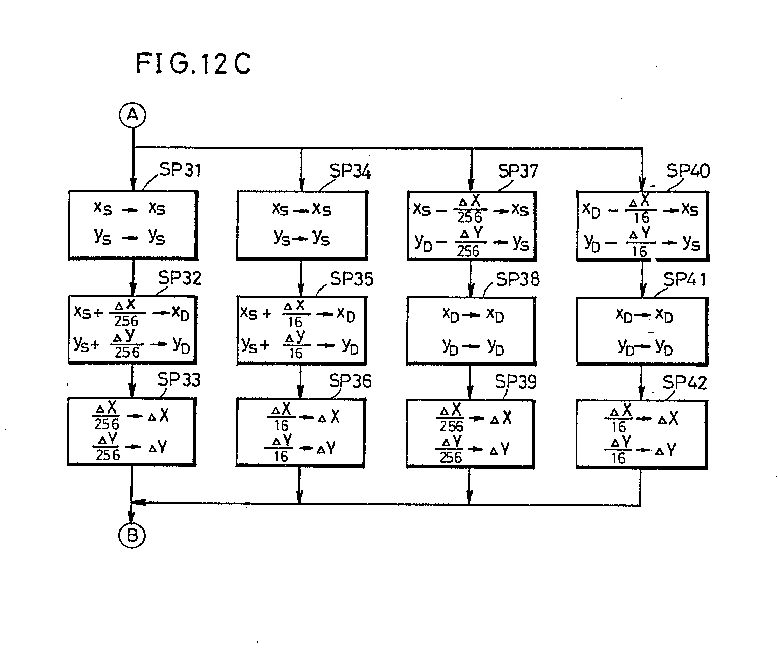

Then, in step SP24, it is determined whether the upper figure and the lower figure are extremely different or not. If they are extremely different, the program proceeds to step SP31 shown in Fig. 12C in response to the output from the map ROM 18. More specifically, if the ratio = (output of the priority encoder 15)/(output of the priority encoder 13) is larger than a predetermine value, it is necessary to set new coordinates and the decoding ROM 16 provides a decode signal indicating that to the map ROM 18.

In the example shown in Fig. 6, the start point coordinates S4 are relatively near the border line $W_X$ and the end point coordinates D4 are more distant from the border line $W_X$. Accordingly, in this case, new coordinates are set instead of the end point coordinates D4 so that they come near the border line $W_X$. More specifically, in step SP31, the start point coordinates H#80 in the X direction remain unchanged and in step SP32, new coordinates are set as the end point coordinates $X_D$ in the X direction. The new end point coordinates $X_D$ are obtained by adding to the start point coordinates $X_S$ and a value obtained by shifting the data $\Delta X$ to the left by 8 bits. Shifting of $\Delta X$ of the left by 8 bits as stated

- 13 -

above is applied in one of the cases where the number of divisions applied to the distance between the start point and the end point differs according to the ratio to determine the proportion for the end point to approach the border line $W_X$. Specifically stated, $\Delta X$ is H#27F00 as described above and when shifted to the left by 8 bits, it becomes H#27F. Then, as a result of addition of H#27F to the start point coordinates H#80, the new end point coordinates $X_D$ are H#2FF. Further, in step SP33, setting is made to a value obtained by shifting $\Delta X$ to the left by 8 bits, namely, H#27F and the program proceeds to step SP28 shown in Fig. 12A.

It is to be noted that the condition $|\Delta X|/$ (number of divisions) $> |X_S - W_X|$ must be satisfied. If not, the new end point coordinates $(X_D, Y_D) = (X_S + |\Delta X|/$ (number of divisions), $Y_S + |\Delta Y|/$ (number of divisions) would exist within the area E, namely, in the state IN → IN, and therefore, the condition IN → OUT could not be satisfied. Consequently, contraction of data is caused in the OR gates 12 and 14 and the priority encoders 13 and 15 and as a result, the worst case should be taken into consideration as to the output of the decoding ROM 16. For example, as a case where $|\Delta X|$ is as small as possible and $|X_S - W_X|$ is as large as possible with the addresses "1" and "4" in the decoding ROM 16, the case of $|X_S - W_X| =$

- 14 -

H#000000FF and $|\Delta X|$ = H#00010000 might be considered. If these data are supplied to the OR gates 12 and 14, the conditions become H#000000FF = B#00000011 and H#00010000 = B#00010000 and the outputs of the decoding ROM 16 become "1" and "4". Then, the relation $|\Delta X|/256$ = 00000100 > FF = $|X_S - W_X|$ is established. In this case also, the decoding ROM 16 provides a decode signal to the map ROM 18 so that the program proceeds to step SP31.

In step SP28, it is determined whether or not $|\Delta X|$ is smaller than a predetermined value $\ell$, for example, 0.1. Since $\Delta X$ = 27 F in this case, it is determined to be larger than 0.1 and the program returns to step SP21. This operation is repeated till $\Delta X$ becomes smaller than the predetermined value. Then, the program proceeds to the middle point division routine in step SP27 so that convergence on an intersection point is made. More specifically, in the step SP271, X is obtained by adding $X_S$ to $\Delta X$ and Y is obtained by adding $Y_S$ to $\Delta Y$. It is determined whether or not X and Y are in a field IN bounded by border lines $W_{XMAX}$ and $W_{XMIN}$, in the sep SP272. If X and Y are in the field IN, X is replaced by $X_S$ and Y is replaced by $Y_S$, in the step SP273. In the step SP274, $\Delta X$ and $\Delta Y$ are divided by two so that new value $\Delta X$ and new value $\Delta Y$ can be obtained, respectively. As a result, the middle point is obtained.

In the above description, if the end point coordinates $X_D$ are not so distant from the border line $W_X$ as described above and a middle point division method is not applied, for example, in the case of $|X_S - W_X| = |H\#000000FF| = |B\#00000011|$ and $|\Delta X| = |H\#00001000| = |B\#00001000|$, the priority encoders 13 and 15 provide "1" and "3". Thus, if the ratio is smaller than the preceding value, the program proceeds to step S34, where the start point coordinates $X_S$ remain unchanged and new coordinates are set instead of the end point coordinates $X_D$. In this case, however, the data $\Delta X$ is shifted by 4 bits. More specifically, if the end point coordinates $X_D$ are not so distant from the border line, the proportion for the end point coordinates $X_D$ to approach the border line $W_X$ is made small.

In the example shown in Fig. 6, the start point coordinates S4 are near the border line $W_X$ and the end point coordinates D4 are distant from the border line $W_X$ and as a result, instead of the end point coordinates D4, new coordinates are set to approach the border line $W_X$. However, in the example shown in Fig. 7, the start point coordinates S5 are distant from the border line $W_X$ and the end point coordinates D5 are near the border line $W_X$. Therefore, in this case, instead of the start point coordinates S5, new coordinates approaching the border line $W_X$ are set. For this purpose, in step SP24 shown in Fig. 12A, it is determined that the start point coordinates are not near the border line $W_X$ since the ratio is small. Then, in step SP25, a difference between the end point coordinates $X_D$ and the border line $W_X$ and a difference between the start point coordinates $X_S$ and the end point coordinates $X_D$, namely, $|\Delta X|$ are provided. Further, it is determined in step SP26 whether or not the ratio of $|X_D - W_X|$ to $|\Delta X|$ is larger and the end point coordinates $X_D$ come near the border line $W_X$. If the end point coordinates $X_D$ come near the border line $W_X$, the program proceeds to step SP37.

In step SP37, a value obtained by shifting $\Delta X$ to the left by 8 bits is subtracted for the end point coordinates $X_D$ so that a new start point can be obtained as the result. In step SP38, the end point $X_D$ is left unchanged and in step SP39, new data $\Delta X$ is obtained by shifting $\Delta X$ to the left by 8 bits. Thus, the end point coordinates $X_D$ can be set to new coordinates approaching the border line $W_X$.

In the case of the line segment extends from the area E to the area B as shown in Fig. 8, the line segment does not cross the border line $W_X$ but crosses the border line $W_Y$. As a result, in step SP21, it is determined that the line segment is not clipped on the border line $W_X$ and

- 17 -

then, the program proceeds to step SP51. In step SP51, it is determined whether the line segment is to be clipped on the border line $W_Y$ or not. Then, processing operations in steps SP52 to SP56 are performed. These processing operations are the same as the previously stated clipping operation in the X direction.

In the case of the line segment extends from the area E to the area C as shown in Fig. 9, it cannot be determined whether clipping is to be made on the border line $W_X$ or $W_Y$. Consequently, when it is determined in step SP51 that the line segment cannot be clipped on the border line $W_Y$, the data $|X_S - W_X|$ and $|\Delta X|$ are entered in step SP57 and the ratio between them is latched in the ratio latch 17. Then, in step SP58, the data $|Y_S - W_Y| /|\Delta Y|$ is provided. Subsequently in steps SP59 and SP60, comparison is made between the ratio $|X_S - W_X| /|\Delta X| = \rho_1$ and the ratio $|Y_S - W_Y| / |\Delta Y| = \rho_2$ so that the border line with the smaller ratio is adopted. If there is not a significant difference between $\rho_1$ and $\rho_2$, the program jumps to the middle point division routine. For example, in the case of $|X_S - W_X| = $ H#20 and $|\Delta X| = $ H#50, the outputs of the priority encoders 13 and 15 are "1" and "1" respectively. In the case of $|Y_S - W_Y| = $ H#10 and $|\Delta Y| = $ H#1000, the outputs of the priority encoders 13 and 15 are "1" and "3" respectively. Thus, since the relation

- 18 -

(1/1) $>$ (1/3) is established, soft sensing is applied to the output from the decoding ROM 16 to determine the border line $W_{YMAX}$ = H#100 so that processing is performed to converge a line segment on this border line.

Although in the foregoing, the case of IN → OUT was described, processing can also be made in the same manner in the case of OUT → IN. More specifically, in the case of OUT → IN, it is determined in step SP8 shown in Fig. 11 that the line segment is in the state OUT → IN and processing operation is performed in the Poi routine in step SP9. Thus, an intersection point is obtained by an improved middle point division method so that the portion outside the area concerned is clipped and the line segment within the area is displayed in step SP10. If the line segment extends from the outside of the area into the area and then to the outside of the area, processing operations of OUT → IN and IN → OUT are performed in step SP11.

Although the present invention has been described and illustrated in detail, it is clearly understood that the same is by way of illustration and example only and is not to be taken by way of limitation, the spirit and scope of the present invention being limited only by the terms of the appended claims.

0167797

WHAT IS CLAIMED IS:

1. A clip circuit for CRT display unit, in which portions outside a predetermined area displayed on the CRT screen are clipped from a line segment extending from the inside of said predetermined area to the outside of said area or from the outside of said area into said area, said clip circuit comprising:

line segment data providing means (20) for providing data representing start point coordinates and end point coordinates of said line segment,

area data providing means (21) for providing data representing border lines of said predetermined area,

ratio calculating means (82) for calculating a ratio of a distance between the start point coordinates and the end point coordinates of said line segment to a distance between the start point coordinates or the end point coordinates and one of the border lines of said predetermined area, based on the line segment data provided from said line segment data providing means (20) and the data representing the border line provided from said area data providing means (21),

determining means (SP24, SP26, SP54, and SP56) for determining whether or not the ratio calculated by said ratio calculating means (82) is larger than a predetermined value,

coordinates setting means (SP32, SP35, SP37 and SP40) for setting new start point coordinates or new end point coordinates in the vicinity of a point of intersection between said line segment and said border line of said predetermined area instead of said start point coordinates or end point coordinates of said line segment, in response to determination by said determining means that said ratio is larger than said predetermined value, and

intersection point calculating means (SP27) for calculating a point of intersection between the line segment connecting said new start point coordinates and said end point coordinates or the line segment connecting said start point coordinates and said new start point coordinates and said border line of said predetermined area by a middle point division method, based on said new start point coordinates or new end point coordinates set by said coordinates setting means and the data representing the border line provided from said area data providing means (21).

2. A clip circuit for CRT display unit in accordance with claim 1, wherein

said coordinates setting means comprises means (SP32, SP35, SP37 and SP40) for setting new start point coordinates or new end point coordinates using as a unit, a number obtained by dividing by a prescribed number, a line segment connecting the start point coordinates and the end point coordinates provided from said line segment data providing means, according to the ratio calculated by said ratio calculating means.

3. A clip circuit for CRT display unit in accordance with claim 1, wherein

said intersection point calculating means comprises means (SP27, SP31, SP34, SP38, and SP41) for calculating a point of intersection between the line segment connecting the start point coordinates and the end point coordinates provided form said line segment data providing means and the border line of said predetermined area by using a middle point division method, in response to determination by said determining means that said ratio is smaller than said predetermined value.

4. A clip circuit for CRT display unit in accordance with claim 2, wherein

said ratio calculating means comprises means (SP33, SP36, SP39 and SP42) for dividing said ratio by said prescribed number to use a ratio obtained by the division as a new ratio.

0167797

# FIG.1

# FIG.2

# FIG.3

0167797

# FIG.4

SOFT SENSE

SOFT BRANCH

## FIG.5

| MSB | | | | | | | LSB | |
|---|---|---|---|---|---|---|---|---|
| 1 | X | X | X | X | X | X | X | 7 |
| 0 | 1 | X | X | X | X | X | X | 6 |
| 0 | 0 | 1 | X | X | X | X | X | 5 |
| 0 | 0 | 0 | 1 | X | X | X | X | 4 |
| 0 | 0 | 0 | 0 | 1 | X | X | X | 3 |
| 0 | 0 | 0 | 0 | 0 | 1 | X | X | 2 |
| 0 | 0 | 0 | 0 | 0 | 0 | 1 | X | 1 |
| 0 | 0 | 0 | 0 | 0 | 0 | 0 | 1 | 0 |
| 0 | 0 | 0 | 0 | 0 | 0 | 0 | 0 | 0 |

## FIG.6

Ⓔ   Ⓕ   ( 28000, D00)
D4
S4
(80,100)
$W_X = W_{XMAX} = 100$

## FIG.7

Ⓔ   Ⓕ D5
(35000, B00)
S5
(80,100)
$W_X = W_{XMAX} = 27FF0$

## FIG.8

D6
(140,B00)
Ⓑ
$W_Y = W_{YMAX}$
Ⓔ
S6
( 80,100)

## FIG.9

(130,10F0)
Ⓑ $|\Delta Y|$ Ⓒ
$|Y_S - W_Y|$
$W_Y = 100$
$|X_S - W_X|$
Ⓔ (E0,F0) Ⓕ
$|\Delta X|$
$W_X = 100$

$$\frac{|X_S - W_X|}{|\Delta X|} < \frac{|Y_S - W_Y|}{|\Delta Y|} \rightarrow \text{CROSS WITH } W_X$$

$$\frac{|X_S - W_X|}{|\Delta X|} > \frac{|Y_S - W_Y|}{|\Delta Y|} \rightarrow \text{CROSS WITH } W_Y$$

## FIG.11

```
        ┌─────────┐
        │  START  │
        └────┬────┘
             │
             ▼                    SP1
        ┌──────────────┐
        │ READ POINTS  │
        └──────┬───────┘
               │               SP2
        ┌──────────────┐
        │ Xs - WXMIN   │
        │ Xs - WXMAX   │
        │ ys - WYMIN   │
        │ ys - WYMAX   │
        └──────┬───────┘
               │               SP3
        ┌──────────────┐
        │ XD - WXMIN   │
        │ XD - WXMAX   │
        │ yD - WYMIN   │
        │ yD - WYMAX   │
        └──────┬───────┘
               │               SP4
             ╱   ╲        YES
           ╱ IN→IN ╲──────────►
             ╲   ╱
              NO │            SP5
             ╱   ╲     YES
      ◄─────╱OUT→OUT╲
             ╲   ╱
              NO │         SP6       SP7
             ╱   ╲    YES  ┌──────────┐
            ╱IN→OUT╲──────►│   Pio    │──►
             ╲   ╱         └──────────┘
              NO │ SP8            SP9
             ╱   ╲    YES  ┌──────────┐
           ╱OUT→IN ╲─────► │   Poi    │──►
             ╲   ╱         └──────────┘
              NO │ SP11                    SP10
        ┌──────────┐              ┌──────────┐
        │  Poio    │              │ DISPLAY  │
        └─────┬────┘              └──────────┘
              │          SP12
       NO   ╱   ╲
      ◄────╱ END?╲
            ╲   ╱
             YES │
        ┌─────────┐
        │   END   │
        └─────────┘
```

## FIG.10

$$W_X$$

$$|\Delta Y|$$

$$|y_S - W_Y|$$

$$W_Y$$

$$D$$

$$S$$

$$|X_S - W_X|$$

$$|\Delta X|$$

FIG.12A

0167797

# F I G.12 B

# FIG.12C

(A)

SP31
$$x_S \rightarrow x_S$$
$$y_S \rightarrow y_S$$

SP34
$$x_S \rightarrow x_S$$
$$y_S \rightarrow y_S$$

SP37
$$x_S - \frac{\Delta X}{256} \rightarrow x_S$$
$$y_D - \frac{\Delta Y}{256} \rightarrow y_S$$

SP40
$$x_D - \frac{\Delta X}{16} \rightarrow x_S$$
$$y_D - \frac{\Delta Y}{16} \rightarrow y_S$$

SP32
$$x_S + \frac{\Delta X}{256} \rightarrow x_D$$
$$y_S + \frac{\Delta Y}{256} \rightarrow y_D$$

SP35
$$x_S + \frac{\Delta X}{16} \rightarrow x_D$$
$$y_S + \frac{\Delta Y}{16} \rightarrow y_D$$

SP38
$$x_D \rightarrow x_D$$
$$y_D \rightarrow y_D$$

SP41
$$x_D \rightarrow x_D$$
$$y_D \rightarrow y_D$$

SP33
$$\frac{\Delta X}{256} \rightarrow \Delta X$$
$$\frac{\Delta Y}{256} \rightarrow \Delta Y$$

SP36
$$\frac{\Delta X}{16} \rightarrow \Delta X$$
$$\frac{\Delta Y}{16} \rightarrow \Delta Y$$

SP39
$$\frac{\Delta X}{256} \rightarrow \Delta X$$
$$\frac{\Delta Y}{256} \rightarrow \Delta Y$$

SP42
$$\frac{\Delta X}{16} \rightarrow \Delta X$$
$$\frac{\Delta Y}{16} \rightarrow \Delta Y$$

(B)